# DEMANDE DE BREVET EUROPEEN

(11) **EP 4 098 157 A1**
(43) Date de publication de la demande: **07.12.2022**
(21) Numéro de dépôt: 22175715.6
(22) Date de dépôt: 27.05.2022
(51) Int. Cl.: A47J 37/00

(54) **TABLE-BRASERO**

(30) Priorité: 31.05.2021 FR 2105684
(71) Demandeur: Confort Domo France, 51140 Chalons sur Vesle (FR)
(72) Inventeur: BLANCHARD-JACQUET, Jacques, 51140 CHALONS SUR VESLE (FR)
(74) Mandataire: Cabinet Bleger-Rhein-Poupon

(57) **Abrégé**

L'invention concerne une table-braséro (1) comportant un plateau (2) supporté par un piétement (3, 4), ledit plateau (2) présentant une face supérieure (5) et une face inférieure (6) et étant pourvu d'un orifice traversant (7) dans lequel est encastré un creuset (8) adapté pour accueillir un matériau combustible. Elle est caractérisée en ce qu'elle comporte des moyens d'orientation, vers une zone donnée de l'espace environnant, d'un flux d'air chaud généré par la combustion d'un matériau combustible placé dans ledit creuset (8).

## Description

La présente invention a pour objet une table-braséro comportant un plateau supporté par un piétement, ledit plateau présentant une face supérieure et une face inférieure et étant pourvu d'un orifice traversant dans lequel est encastré un creuset adapté pour accueillir un matériau combustible.

Traditionnellement utilisés en environnement extérieur en tant qu'appareils de chauffage, et/ou pour la cuisson d'aliments, les braséros se présentaient à l'origine sous la forme d'un simple contenant en matériau métallique, tel qu'un chaudron ou un fût, apte à l'allumage d'un feu.

Posés à même le sol, ou parfois montés sur pieds, ces modèles rudimentaires permettaient notamment à des ouvriers agricoles ou du domaine du bâtiment de se réchauffer lors de travaux hivernaux ou d'intempéries et de disposer d'une possibilité de préparer une boisson chaude ou de griller des aliments, directement sur leur lieu d'intervention.

Au fil du temps, les modèles classiques ont progressivement fait l'objet d'adaptations leur permettant de répondre à de nouveaux besoins. L'une d'entre elles a ainsi consisté à compléter le contenant faisant office de foyer d'un plateau périphérique permettant aux utilisateurs de venir simplement s'y attabler pour boire un verre tout en se réchauffant, ou d'y déposer des objets, tels que des ustensiles de cuisine et de la vaisselle ainsi que des aliments, avantageusement placés à proximité immédiate du feu de cuisson.

Le but de la présente invention est d'améliorer encore de telles tables-braséros en les équipant d'une solution permettant d'orienter le flux d'air chaud généré par un feu allumé dans le foyer vers une zone donnée de l'espace, et en particulier d'éloigner ce flux d'air chaud de la zone de l'espace surplombant immédiatement le plateau, de sorte à éviter un chauffage intempestif des éléments disposés sur celui-ci. En somme, le but de l'invention est de proposer une solution permettant essentiellement de fournir une table-braséro conçue apte à réchauffer des convives, voire cuire leur nourriture, sans pour autant chauffer leurs consommations ou ustensiles déposés sur le plateau.

A cet effet, la présente invention propose une table braséro du genre indiqué en préambule, caractérisée en ce qu'elle comporte des moyens d'orientation, vers une zone donnée de l'espace environnant, d'un flux d'air chaud généré par la combustion d'un matériau combustible placé dans ledit creuset.

Par ailleurs, selon le cas, la table braséro selon l'invention peut également présenter l'une ou plusieurs des caractéristiques suivantes :
- Elle comporte un ensemble d'allure tubulaire, reposant sur la face supérieure du plateau autour dudit creuset, présentant une base et une extrémité supérieure, ledit ensemble comprenant une paroi externe pleine, s'étendant depuis la base sur une hauteur h1, ainsi qu'une paroi interne présentant une portion pleine s'étendant depuis la base sur une hauteur h2 et une portion ajourée s'étendant sur une hauteur h3, s'étendant entre sa portion pleine et ladite extrémité supérieure.
- La hauteur h2 de la paroi interne est au moins égale à la hauteur h1 de la paroi externe.
- Le creuset est délimité par une paroi périphérique dont au moins une partie, de hauteur h4, s'étend au-dessus de la face supérieure du plateau tandis que la hauteur h1 de la paroi externe dudit ensemble est supérieure à la hauteur h4 du creuset.
- Ledit ensemble d'allure tubulaire est conformé de manière telle que sa paroi interne s'étend à équidistance entre le bord du creuset et sa paroi externe.

Les caractéristiques et avantages de l'invention ressortiront de la description détaillée qui va suivre, qui se rapporte à un exemple particulier de réalisation d'une table-braséro selon l'invention, qui ne doit cependant pas être considéré comme limitatif de l'invention.

L'invention sera mieux comprise, et d'autres caractéristiques et avantages de l'invention apparaîtront à la lumière de la description qui suit en relation avec les figures annexées dans lesquelles.

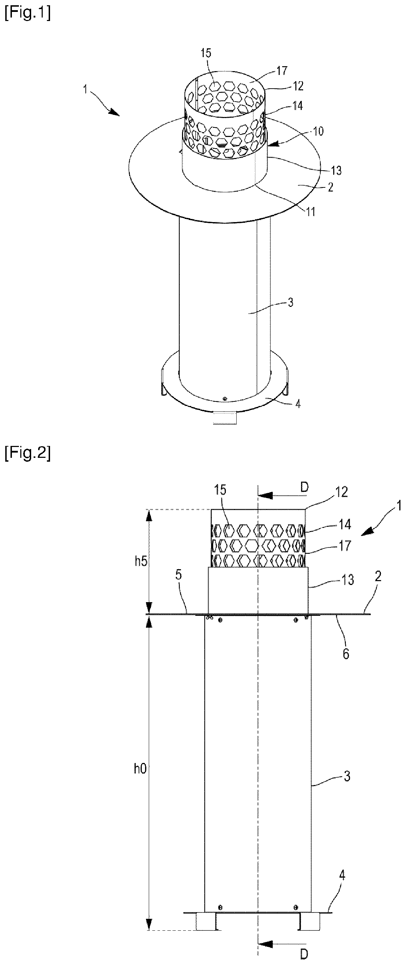

[Fig.1] illustre une vue en perspective d'une table-braséro selon l'invention,
[Fig. 2] illustre une vue en plan de la table-braséro de la figure 1, et

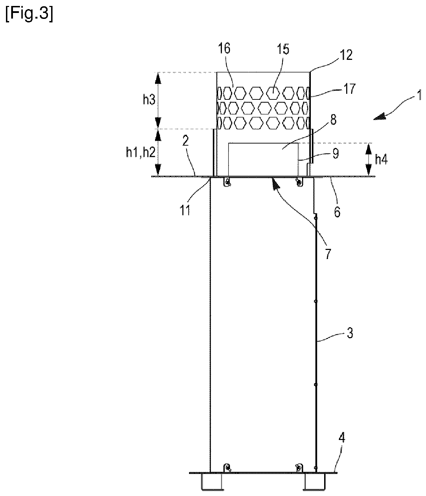

[FIG. 3] illustre une vue en coupe selon DD de la table-braséro de la figure 1.

En référence aux figures, dans la variante de réalisation illustrée, la table-braséro 1 selon l'invention est réalisée en matériau métallique, par exemple en acier et/ou acier inoxydable brut ou recouvert d'une peinture adéquate, et comporte un plateau 2, supporté par un piétement se présentant ici sous la forme d'un fût cylindrique 3 dont l'extrémité inférieure est pourvue d'une embase 4 munie de plusieurs pieds.

A noter que la forme et la hauteur de la table-braséro 1, ici tubulaire et d'un mètre de hauteur, ainsi que les matériaux utilisés pour le piétement, ici métallique, mais pouvant être en bois ou autres matériaux, ne constituent pas un aspect limitatif de l'invention.

De manière classique, le plateau 2 présente une face supérieure 5 et une face inférieure 6 et est pourvu d'un orifice traversant 7 dans lequel est encastré un creuset 8 adapté pour accueillir un matériau combustible, tel que par exemple des pellets de fibres de bois compressées, du charbon de bois, ou tout matériau combustible équivalent permettant d'allumer un feu et de le maintenir actif durant un certain laps de temps, par exemple au moins une heure.

Dans la variante de réalisation illustrée, le plateau 2 se présente sous la forme d'un anneau amovible bordant l'extrémité supérieure du fût 3, et au centre duquel est disposé le creuset 8. Il est par ailleurs à noter que la paroi périphérique 9 de ce dernier, de hauteur h4, s'étend ici intégralement au-dessus de la face supérieure 5 du plateau 2.

D'autre part, en termes de dimensions, le plateau 2 présente un diamètre d'environ 75 cm et s'étend à une hauteur h0 d'environ 1m au-dessus du sol lorsque le piétement repose sur celui-ci. Une telle hauteur est adaptée pour qu'une personne adulte, de taille moyenne, puisse poser un verre et se réchauffer le haut du corps et les mains en se tenant debout auprès de la table-braséro 1, avec ses avant-bras éventuellement posés sur le plateau 2, tout en profitant de sa boisson. Il est toutefois entendu que ces dimensions - diamètre de plateau, hauteur h0, etc. - sont modifiables en fonction de l'usage de la table-braséro selon l'invention.

Conformément à l'invention, la table-braséro 1 comporte un ensemble d'allure tubulaire 10, de section ronde, polygonale ou quelconque. Cet ensemble 10 présente une hauteur totale h5 prévue ici de l'ordre de 40cm, et repose, de manière fixe ou amovible, sur la face supérieure 5 du plateau 2 autour du creuset 8. Il est d'ailleurs à noter que celui-ci peut également être prévu amovible de sorte à faciliter son nettoyage à froid.

Tel qu'illustré sur les dessins, l'ensemble 10 présente une base 11, ainsi qu'une extrémité supérieure 12, et comprend une paroi d'allure tubulaire externe 13, ainsi qu'une paroi d'allure tubulaire interne 14 insérée dans la paroi externe 13 et indépendante de cette dernière.

Plus précisément, la paroi externe 13 s'étend depuis la base 11 de l'ensemble 10, et présente une hauteur totale h1, tandis que la paroi interne 14, s'étend depuis la base 11 jusqu'à l'extrémité supérieure 12 de l'ensemble 10. La paroi interne 14 présente avantageusement une portion pleine 16 s'étendant depuis la base 11, sur une hauteur h2, et une portion ajourée 17, présentant une pluralité de lumières 15, s'étendant sur une hauteur h3, comprise entre sa portion pleine et ladite extrémité supérieure 12.

Par ailleurs, il convient de remarquer que conformément à l'invention la hauteur h2 de la paroi interne 14 est ici égale à la hauteur h1 de la paroi externe 13. Par ailleurs, la hauteur h3 de la paroi interne 14 est choisie de manière telle qu'elle permet une bonne diffusion de la chaleur tout en interdisant l'accès au creuset 8.

De plus, selon l'invention, cette hauteur h1 de la paroi externe 13 est prévue supérieure à la hauteur h4 de la portion de la paroi périphérique 9 du creuset 8 s'étendant au-dessus de la face supérieure 5 du plateau 2.

Par ailleurs, conformément à une autre caractéristique non limitative de l'invention, dans la variante de réalisation illustrée, l'ensemble d'allure tubulaire 10 est conformé de manière telle que sa paroi interne 14 s'étend à équidistance entre la paroi périphérique 9 du creuset 8 et sa paroi externe 13, ce qui permet une circulation appropriée du flux d'air en provenance du creuset 8 dans l'ensemble 10.

Grâce à une telle structure intégrant l'ensemble tubulaire 10, comprenant une paroi externe 13 pleine et une paroi interne 14, pleine au niveau de sa portion inférieure 16 et ajourée au niveau de sa portion supérieure 17, les utilisateurs de la table-braséro 1 sont réchauffés par le flux d'air chaud spécifiquement orienté vers l'extrémité supérieure 12 dudit ensemble tubulaire 10, et par conséquent leur tronc et leur tête.

Ce flux d'air chaud s'échappe par les orifices 15 de la portion ajourée 17, tandis que la zone de l'espace surplombant immédiatement la face supérieure 5 du plateau 2 est isolée de ce flux d'air chaud par la présence d'une double paroi pleine formée par la portion pleine 16 et la paroi externe pleine 13 et s'étendant sur une hauteur h1, supérieure à celle de la paroi périphérique du creuset 8.

Les consommations, telles que les boissons placées sur le plateau 2 restent ainsi avantageusement à température ambiante alors même que les convives profitent de la chaleur du feu allumé dans le creuset 8, pour se réchauffer, ou le cas échéant pour griller des aliments posés sur une plancha disposée au-dessus du creuset 8.

Il convient par ailleurs de noter que bien qu'étant prévue pleine dans la variante de réalisation illustrée, la paroi périphérique du piètement supportant le plateau 2 peut être ajourée en vue de permettre une meilleure circulation de l'air de combustion. Pour des raisons esthétiques, la forme des orifices correspondants pourra par exemple être prévue identique à celle des orifices que comporte la partie ajourée 17 de la paroi interne 14 de l'ensemble tubulaire 10.

A noter également que la paroi externe 13 pourra aussi être composée d'une partie pleine et d'une partie ajourée, pour permettre de réduire l'influence de la brise sur les flammes, notamment lors du démarrage de la combustion. Dans ce cas, les parties ajourées respectives des deux parois 13, 14 seront prévues décalées l'une par rapport à l'autre. De plus, la portion pleine de la paroi externe présentera toujours une hauteur h1 égale à la hauteur h2 de la paroi interne. La hauteur de la partie ajourée de la paroi externe sera, quant à elle, variable.

## Revendications

1. Table-braséro (1) comportant un plateau (2) supporté par un piétement (3, 4), ledit plateau (2) présentant une face supérieure (5) et une face inférieure (6) et étant pourvu d'un orifice traversant (7) dans lequel est encastré un creuset (8) adapté pour accueillir un matériau combustible, **caractérisée en ce qu'**elle comporte des moyens d'orientation, vers une zone donnée de l'espace environnant, d'un flux d'air chaud généré par la combustion d'un matériau combustible placé dans ledit creuset (8).

2. Table-braséro (1) selon la revendication 1, **caractérisée en ce qu'**elle comporte un ensemble (10) d'allure tubulaire présentant une base (11), reposant sur la face supérieure du plateau (2) autour du creuset (8) , et une extrémité supérieure (12), ledit ensemble (10) comprenant une paroi externe pleine (13), s'étendant depuis sa base (11), sur une hauteur h1, ainsi qu'une paroi interne (14) présentant une portion pleine (16) s'étendant depuis sa base (11), sur une hauteur h2, et une portion ajourée (17) s'étendant sur une hauteur h3, comprise entre sa portion pleine (16) et ladite extrémité supérieure (12).

3. Table-braséro (1) selon la revendication 2, **caractérisée en ce que** la hauteur h2 de la paroi interne (14) est au moins égale à la hauteur h1 de la paroi externe (13).

4. Table-braséro (1) selon l'une quelconque des revendications 2 ou 3, **caractérisée en ce que** le creuset (8) est délimité par une paroi périphérique (9) dont au moins une partie, de hauteur h4, s'étend au-dessus de la face supérieure (5) du plateau (2) et **en ce que** la hauteur h1 de la paroi externe (13) dudit ensemble (10) est supérieure à la hauteur h4 du creuset (8).

5. Table-braséro (1) selon l'une quelconque des revendications 2 ou 3, **caractérisée en ce que** ledit ensemble (10) d'allure tubulaire est conformé de manière telle que sa paroi interne (14) s'étend à équidistance entre le bord du creuset (8) et sa paroi externe (13).
